# FASCICULE DE BREVET EUROPEEN

(11) **EP 2 289 773 B1**
(45) Date de publication et mention de la délivrance du brevet: **20.06.2012**
(21) Numéro de dépôt: 10173122.2
(22) Date de dépôt: 17.08.2010
(51) Int. Cl.: B62D 53/04, B60D 1/155, B60D 1/30, B62D 63/06

(54) **Ensemble routier comprenant un véhicule tracteur, une remorque à timon coulissant et un dispositif de guidage axial, et remorque correspondante**
Wegtransport, der ein Zugfahrzeug, einen Anhänger mit verschiebbarer Deichsel und eine axiale Lenkvorrichtung umfasst, und entsprechender Anhänger
Vehicle combination including a tractor vehicle, a trailer with a sliding drawbar and an axial guide device, and corresponding trailer

(30) Priorité: 27.08.2009 FR 0955856
(43) Date de publication de la demande: 02.03.2011
(73) Titulaire: Le Goff, Jean Philippe, 56150 Baud (FR)
(72) Inventeur: Le Goff, Jean Philippe, 56150 Baud (FR)
(74) Mandataire: Hays, Bertrand

(56) Documents cités:
- EP-A1- 1 462 280
- EP-A1- 1 598 262
- GB-A- 1 300 701
- US-A- 4 049 289

## Description

La présente invention concerne un ensemble routier comprenant un véhicule tracteur, une remorque à timon coulissant, et un dispositif à guidage axial entre le véhicule tracteur et la remorque, ainsi qu'une remorque correspondante.

Il est connu, notamment dans le document brevet EP 1 598 262, un ensemble routier comprenant
- un véhicule tracteur comprenant un châssis sur lequel sont montés au moins un essieu avant et un essieu arrière,
- une remorque comprenant un châssis sur lequel sont montées au moins deux roues,
- un dispositif d'attelage comprenant des moyens d'accrochage ou d'attelage montés sur le châssis du véhicule tracteur, en avant de l'essieu arrière, aptes à coopérer avec des moyens d'accrochage complémentaires de la remorque pour accrocher la remorque au véhicule tracteur dans une position dite accrochée de la remorque, et
- un dispositif dit de guidage axial comprenant des premiers moyens de guidage montés sur le véhicule tracteur, aptes à coopérer dans la position accrochée de la remorque, avec des seconds moyens de guidage complémentaires montés sur la remorque pour maintenir l'axe longitudinal médian de la remorque sensiblement dans le plan longitudinal vertical du véhicule tracteur lors de la conduite sur route.

Un tel dispositif de guidage axial permet de réaliser un ensemble routier ayant la charge utile maximale possible (Poids Total Roulant Autorisé) pour un encombrement au sol minimum et une maniabilité équivalente à un véhicule non articulé.

Toutefois, dans les ensembles routiers avec dispositif de guidage axial proposés à ce jour, le châssis du véhicule tracteur doit être coupé juste en arrière de son essieu arrière de façon à pouvoir placer, juste derrière lui, l'essieu de la remorque et limiter ainsi au maximum l'effet de ripage des roues de la remorque dans les virages. A ce jour, il n'existe aucune fabrication de série de véhicule utilitaire avec châssis raccourci ce qui nécessite une préparation artisanale onéreuse des ensembles routiers à guidage axial avec pour conséquence de limiter considérablement leur diffusion.

L'autre solution, également coûteuse, est de construire une remorque à guidage axial équipée d'un essieu de type directionnel. Cet essieu étant disposé derrière le châssis du véhicule tracteur, l'ensemble routier ainsi formé est beaucoup moins compact.

Le but de la présente invention est de proposer un ensemble routier comprenant une remorque à guidage axial, dont le châssis est conçu avec une architecture particulière mettant en oeuvre une combinaison de moyens, ayant pour avantage, d'une part, de pouvoir s'adapter à un grand nombre de modèles de véhicules utilitaires standard de type châssis cabine du marché, quelque soit la longueur de leur empattement, la largeur de leur voie ou leur forme, et sans qu'il soit nécessaire de raccourcir l'arrière de leur châssis ou d'avoir recours à un essieu de remorque de type directionnel pour limiter l'effet de ripage et, d'autre part et en même temps, de pouvoir recevoir un grand nombre de modèles de carrosseries de longueur, de largeur, de hauteur et de charge utile variables correspondant aux standards du marché. Un tel châssis de remorque à guidage axial, dit « universel » a pour autres avantages de pouvoir être fabriqué en série à prix compétitif, et de pouvoir s'atteler à un grand nombre de véhicules utilitaires de série grâce à un kit d'attelage et de guidage facile à poser.

A cet effet, la présente invention a pour objet un ensemble routier comprenant
- un véhicule tracteur comprenant un châssis sur lequel sont montés au moins un essieu avant portant des roues avant et un essieu arrière portant des roues arrière,
- une remorque comprenant un châssis sur lequel sont montées au moins deux roues,
- un dispositif d'attelage comprenant des moyens d'accrochage montés sur le châssis du véhicule tracteur, en avant de l'essieu arrière, aptes à coopérer avec des moyens d'accrochage complémentaire de la remorque pour accrocher la remorque au véhicule tracteur dans une position dite accrochée de la remorque de sorte que la remorque soit articulée sur le véhicule tracteur au moins autour d'un axe transversal de tangage sensiblement horizontal passant par le point d'accrochage situé en avant de l'essieu arrière du véhicule tracteur, et,
- un dispositif dit de guidage axial comprenant des premiers moyens de guidage montés sur le véhicule tracteur, aptes à coopérer dans la position accrochée de la remorque avec des seconds moyens de guidage complémentaires montés sur la remorque pour maintenir l'axe longitudinal médian de la remorque sensiblement dans le plan longitudinal vertical du véhicule tracteur lors de la conduite sur route, ledit axe longitudinal médian de la remorque passant sensiblement par ledit axe transversal de tangage, et pour ainsi guider le pivotement de la remorque autour dudit axe transversal,
ledit ensemble étant caractérisé en ce que
- la remorque comprend au moins un timon coulissant à freinage par inertie, associé à un dispositif de freinage par inertie, ledit timon coulissant comportant une partie fixe montée de manière fixe à l'avant du châssis, soit directement soit par l'intermédiaire d'au moins un longeron, et une partie mobile montée dans la partie fixe de manière coulissante, et munie à son extrémité libre avant desdits moyens d'accrochage complémentaires, ledit dispositif de guidage autorisant les mouvements longitudinaux relatifs du freinage,
- ledit châssis de la remorque comprenant une partie dite centrale portant de chaque côté un support de roue vertical, chaque support de roue vertical portant latéralement, du côté extérieur, de manière rotative, au moins une roue, la partie avant de ladite partie centrale étant disposée au-dessus de la partie arrière du châssis du véhicule tracteur dans la position accrochée de la remorque, avec chaque support de roue vertical disposé du côté extérieur du châssis du véhicule tracteur, juste en arrière d'une roue de son essieu arrière.

Selon l'invention, le châssis présente une partie centrale portant des supports de roue verticaux, la partie centrale et ses supports de roue verticaux viennent à cheval sur la partie arrière du châssis du véhicule tracteur de manière à positionner longitudinalement un support de roue vertical dans l'espace qui reste disponible du côté extérieur de l'arrière du châssis entre celui-ci et la roue de la remorque juste en arrière d'une roue de l'essieu arrière du véhicule tracteur. Cette structure de châssis selon l'invention permet ainsi de positionner les roues de la remorque au plus près des roues arrière du véhicule tracteur, notamment de véhicule tracteur de type châssis cabine de modèle standard, malgré l'encombrement de la partie arrière de son châssis, et donc de limiter l'effet de ripage des roues dans les virages.

La remorque comprend en outre un timon d'attelage dit coulissant, à freinage par inertie, fixé à l'avant du châssis de la remorque, et positionné pour s'accrocher via ses moyens d'accrochage complémentaires aux moyens d'accrochage fixés sur le châssis du véhicule tracteur, en avant de son essieu arrière. De manière connue, un tel timon coulissant à freinage par inertie est associé à un dispositif de freinage par inertie comprenant des moyens de freinage disposés au niveau des roues de la remorque et commandés par le déplacement de la partie mobile du timon coulissant via un système de transmission, par exemple de type tringlerie ou de type hydraulique. Un tel timon coulissant permet la réalisation de remorques routières de construction économique jusqu'à un poids total autorisé en charge (PTAC) de 3,5T.

Le dispositif de guidage axial est composé de deux parties aptes à collaborer, l'une fixée au châssis du véhicule tracteur, l'autre au châssis de la remorque, qui permettent de maintenir en permanence l'axe longitudinal médian de la remorque dans le plan longitudinal vertical de son véhicule tracteur. Ce dispositif de guidage axial laisse libre les mouvements relatifs verticaux de suspension et longitudinaux du freinage et peut laisser libre ou non le mouvement de roulis de la remorque par rapport à son véhicule tracteur. Ce dispositif de guidage axial permet de réaliser un ensemble routier ayant la charge utile maximale possible (PTRA , Poids Total Roulant Autorisé) pour un encombrement au sol minimum et une maniabilité équivalente à un véhicule non articulé. Différents modes de réalisation de guidage axial peuvent être mis en oeuvre. Le dispositif de guidage axial est tel que décrit dans le document brevet précité, ou tel que décrit dans la demande de brevet européen, déposée le 9 juillet 2009, sous le n° 09165107.5 et ayant pour titre «Ensemble routier ».

Dans la position accrochée de la remorque, lesdits premiers moyens de guidage du véhicule tracteur sont aptes à coopérer, sensiblement entre l'essieu arrière du véhicule tracteur et l'essieu avant de la remorque, derrière l'essieu avant de la remorque, et/ou devant l'essieu arrière du véhicule tracteur, de préférence sensiblement entre lesdits essieux, avec lesdits seconds moyens de guidage de la remorque pour maintenir l'axe longitudinal médian de la remorque et le plan longitudinal vertical du véhicule tracteur sensiblement confondus et guider le pivotement de la remorque autour dudit axe transversal de tangage.

Selon un mode de réalisation, ladite partie centrale du châssis est formée d'au moins une traverse dite avant et des deux supports de roue verticaux montés aux extrémités de ladite traverse avant, la traverse avant étant disposée dans la position accrochée de la remorque au-dessus du châssis du véhicule tracteur. De préférence, le châssis de la remorque comprend en outre au moins un longeron monté sur la traverse avant et portant ladite partie fixe du timon coulissant. Dans ce mode de réalisation, les supports de roue verticaux sont des parties rigides constitutives du châssis de la remorque, chaque roue de la remorque pouvant être montée sur un support de roue via un système de suspension.

Selon un mode de réalisation, ladite partie centrale comprend en outre une traverse arrière, chaque support de roue est formé d'un longeron support monté entre ladite traverse avant et ladite traverse arrière, les axes des roues de la remorque étant disposés entre la traverse avant et la traverse arrière.

Selon un mode de réalisation, chaque support de roue est formé d'un longeron support creux comprenant deux parois latérales verticales, une paroi supérieure et/ou une paroi inférieure.

Selon un mode de réalisation, chaque roue est montée sur un support de roue vertical au moyen d'un bras oscillant de type tiré ou poussé, monté pivotant en partie inférieure du support de roue vertical autour d'un axe de pivotement transversal.

Selon un mode de réalisation, ladite remorque comprend un système de suspension comprenant lesdits bras oscillants de type tirés ou poussés, supportant les roues, reliés par des biellettes à un dispositif élastique déporté vers l'arrière du châssis de la remorque, chaque biellette étant montée pivotante par une première extrémité à l'extrémité d'un bras solidaire en rotation d'un bras oscillant et par une deuxième extrémité à l'extrémité d'un axe du dispositif élastique sollicité élastiquement vers une position de repos.

Un tel système de suspension à éléments élastiques déportés vers l'arrière, grâce à une liaison par biellettes, permet de réserver, en arrière des châssis de véhicules tracteurs de type châssis cabine disponibles sur le marché, lorsque la remorque est en position accrochée, un espace libre qui assure qu'aucun élément de la remorque ne puisse venir heurter le châssis du véhicule pendant l'utilisation, particulièrement pendant les phases de freinage lorsque le timon coulissant est comprimé et ceci quelle que soit la position relative des suspensions de l'ensemble routier en fonctionnement normal.

Selon un mode de réalisation, lesdits bras oscillants sont de type poussés, chaque bras oscillant s'étendant vers l'avant de la remorque depuis son axe de pivotement en partie inférieure du support de roue vertical.

Selon un autre mode de réalisation, lesdits supports de roue verticaux sont formés par les lames de suspension longitudinales d'un système de suspension, chaque roue est montée à l'extrémité d'un essieu transversal rigide relié aux lames de suspension longitudinales, le corps central dudit essieu transversal étant disposé sous le châssis du véhicule tracteur dans la position accrochée de la remorque. Dans ce mode de réalisation, les supports de roue verticaux sont formés par les lames de suspension qui s'étendent vers le bas depuis la partie centrale du châssis, l'essieu transversal venant se positionner sous le châssis du véhicule tracteur dans la position accrochée. Chaque support de roue vertical peut comprendre au moins une lame de suspension fixée par ses extrémités à un longeron de la partie centrale du châssis de la remorque, le corps central de l'essieu transversal portant à chaque extrémité un bras d'essieu sensiblement vertical sur lequel est monté une roue et par lequel l'essieu transversal est fixé à la partie centrale des lames de suspension. Dans un autre mode de réalisation, chaque support de roue vertical comprend au moins une lame de suspension fixée par sa partie centrale à un longeron de la partie centrale du châssis de la remorque, les extrémités avant et arrière des lames de suspension portent des essieux transversaux tandem de type bogie, l'essieu transversal de la remorque le plus en avant venant sous le châssis du véhicule tracteur en position accrochée de la remorque.

Selon un mode de réalisation, le châssis de la remorque comprend au moins un longeron de type télescopique par rapport à la partie centrale, réglable longitudinalement sur la partie centrale portant les roues et apte à être fixé rigidement longitudinalement en position sur la partie centrale, en particulier sur la traverse avant précitée par des moyens de fixation. Un tel longeron à fonction télescopique fixé rigidement mais de façon réglable longitudinalement à la partie centrale portant les roues, par exemple au moment du carrossage, et auquel est fixé rigidement le timon coulissant situé à l'avant, permet pour un même châssis de remorque :
- d'adapter le châssis de la remorque à différents véhicules tracteur de type châssis cabine quel que soit son empattement,
- d'adapter la longueur du châssis à celle de la carrosserie qu'il doit recevoir, le longeron télescopique ayant une longueur minimale et maximale permettant au châssis de s'adapter à différentes longueurs carrossables standard,
- de positionner le centre de gravité de la remorque carrossée par rapport à ses roues afin de respecter la charge maximale admissible sur le timon ; et
- de régler l'espace minimum de sécurité devant subsister lors du freinage, timon coulissant comprimé, entre, d'une part, l'arrière des roues arrière du véhicule tracteur et l'avant des roues de la remorque et, d'autre part, entre l'extrémité arrière du châssis du véhicule tracteur et la partie centrale de la remorque située à la même hauteur.

Selon un mode de réalisation, le châssis de la remorque comprend une première paire de longerons avant, le timon coulissant étant monté axialement entre les extrémités avant desdits longerons avant.

Selon un mode de réalisation, le châssis de la remorque comprend une première paire de longerons avant télescopiques, montés par des premiers moyens de fixation sur la traverse avant.

Selon un mode de réalisation, le châssis de la remorque comprend au moins un longeron arrière télescopique par rapport à la partie centrale, réglable longitudinalement sur la partie centrale portant les roues et apte à être fixé rigidement longitudinalement en position par des seconds moyens de fixation sur la partie centrale, en particulier sur la traverse arrière précitée, et s'étendant vers l'arrière du châssis de la remorque, chaque longeron arrière étant, de préférence, assemblé à chaque longeron avant correspondant par des moyens d'assemblage. De préférence, le châssis de la remorque comprend une deuxième paire de longerons arrière, chaque longeron de la première et de la deuxième paire étant, de préférence, assemblé à un longeron de l'autre paire par des moyens d'assemblage.

Selon un mode de réalisation, le châssis de la remorque comprend une traverse support d'extrémité avant, liée rigidement par sa partie inférieure, directement ou indirectement, à la partie supérieure des longerons avant du châssis de la remorque. Cette traverse support avant fixée au-dessus des longerons du châssis permet de faciliter l'accrochage de la remorque au véhicule tracteur en assurant la hauteur libre minimale nécessaire au-dessus des garde-boue arrière des véhicules tracteurs pour effectuer l'opération d'accrochage et le libre débattement de ses roues lorsque le carrossage de la remorque est très court. Cette traverse support avant porte avantageusement à ses extrémités des béquilles latérales, démontables, repliables ou escamotables, qui supportent le poids avant de la remorque lorsque celle-ci est dételée.

Selon un mode de réalisation, le châssis de la remorque est équipé de deux supports fixés rigidement sur la traverse support avant, réglables transversalement en position, par exemple lors du carrossage et destinés à recevoir la fixation des extrémités avant du faux châssis de la carrosserie. Ces supports permettent de réaliser la fixation des extrémités avant de différents faux-châssis, quel que soit l'écartement de leurs longerons, tout en laissant libre l'espace latéral côté extérieur situé à la même hauteur que leurs longerons, contrairement à un support transversal continu. L'espace libéré permet le libre débattement des roues arrière du véhicule et facilite son engagement sous la remorque.

Selon un mode de réalisation, ledit châssis de la remorque est équipé d'une carrosserie munie d'un faux-châssis, les longerons du faux-châssis étant fixés directement sur des traverses du châssis de la remorque, de chaque côté des longerons dudit châssis, l'entraxe des longerons d'une paire de longerons du châssis de la remorque étant de préférence au maximum égal à l'entraxe des longerons du véhicule tracteur. Cette disposition a deux avantages principaux. L'entraxe étroit des longerons de la remorque permet de fixer les longerons du faux-châssis de la carrosserie directement sur les traverses de la remorque, de chaque côté des longerons de la remorque et à la même hauteur. Aucun réglage d'écartement de longerons n'est plus nécessaire pour s'adapter au grand nombre d'entraxe de longerons de châssis et faux châssis existants sur le marché. Elle permet en outre de baisser la hauteur de chargement d'une valeur égale à la hauteur des longerons du faux châssis. La moindre rigidité théorique de ce montage est compensée par la rigidité supplémentaire des longerons du châssis de la remorque.

Selon un mode de réalisation, le châssis du véhicule tracteur est équipé d'une traverse, fixée sur le châssis du véhicule tracteur en avant de ses roues arrière, sur laquelle sont fixés de manière réglable en hauteur les moyens d'accrochage. De préférence, des butées élastiques réglables, montées soit sur le châssis du véhicule tracteur soit sur le châssis de la remorque, viennent en contact avec des parties rigides complémentaires montées respectivement soit sur le châssis de la remorque soit sur le châssis du véhicule tracteur, l'ensemble permettant de régler la hauteur de libre débattement des suspensions de la remorque par rapport au véhicule tracteur d'une part et de limiter l'amplitude de ses mouvements relatifs à des positions extrêmes acceptables d'autre part.

Selon un mode de réalisation, le châssis du véhicule tracteur comprend une barre anti-encastrement arrière munie de parties d'extrémités latérales escamotables, déplaçables, par exemple par pivotement ou coulissement entre une position déployée dans laquelle lesdites parties d'extrémités latérales s'étendent latéralement vers l'extérieur au-delà du châssis, en particulier des longerons, sensiblement jusqu'au niveau des flancs extérieurs des roues arrière, et une position escamotée dans laquelle lesdites parties d'extrémités latérales ne dépassent pas latéralement du châssis, afin de laisser passer les roues et les supports de roues de la remorque lors de l'accrochage.

La présente invention a également pour objet une remorque comprenant un châssis sur lequel sont montés au moins deux roues, des moyens d'accrochage aptes à coopérer avec des moyens d'accrochage complémentaires d'un véhicule tracteur pour accrocher la remorque en avant de l'essieu arrière dudit véhicule tracteur dans une position dite accrochée de la remorque, et des moyens de guidage aptes à coopérer dans la position accrochée de la remorque avec des moyens de guidage complémentaires montés sur le véhicule tracteur pour maintenir l'axe longitudinal médian de la remorque sensiblement dans le plan longitudinal vertical du véhicule tracteur, caractérisée en ce que
- la remorque comprend au moins un timon coulissant à freinage par inertie, ledit timon coulissant comportant une partie fixe montée de manière fixe à l'avant du châssis et une partie mobile montée dans la partie fixe de manière coulissante, et munie à son extrémité libre desdits moyens d'accrochage,
- ledit châssis de la remorque comprenant une partie dite centrale portant de chaque côté un support de roue vertical, chaque support de roue vertical portant latéralement, du côté extérieur, de manière rotative, au moins une roue, ladite partie centrale étant apte à être disposée dans la position accrochée de la remorque au-dessus du châssis du véhicule tracteur, avec chaque support de roue vertical disposé du côté extérieur du châssis du véhicule tracteur, juste en arrière d'une roue de l'essieu arrière.

La distance entre les deux supports de roue verticaux, plus précisément mesurée entre leurs faces intérieures, est avantageusement supérieure ou égale à 70 cm, pour permettre le positionnement des desdits supports de roue verticaux de part et d'autre de la plupart des châssis de véhicules tracteur.

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence aux dessins schématiques annexés, sur lesquels :
- la figure 1 est une vue en perspective d'un ensemble routier selon un premier mode de réalisation de l'invention, comprenant une remorque équipée d'une carrosserie en position accrochée sur un véhicule tracteur ;
- la figure 2 est une vue en perspective de dessus du châssis de la remorque de l'ensemble routier de la figure 1, en l'absence de carrosserie ;
- la figure 3 est une autre vue en perspective de dessus du châssis de la remorque de la figure 1, avec des arrachés partiels au niveau de la partie centrale du châssis faisant apparaitre le système de suspension ;
- la figure 4 est une vue en perspective de dessous de la remorque de la figure 1 faisant apparaître l'espace libre compris sous sa partie centrale et entre ses supports de roues ;
- la figure 5 est une vue de dessus du véhicule tracteur de la figure 1, sur laquelle est illustré le positionnement du système de suspension et des roues de la remorque dans la position accrochée de la remorque
- la figure 6 est une vue en perspective des moyens d'accrochage du véhicule tracteur de la figure 1;
- la figure 7 est une vue de dessus de l'ensemble routier de la figure 1 en l'absence de carrosserie sur la remorque ;
- la figure 8 est une vue schématique en coupe selon le plan longitudinal vertical du véhicule tracteur de l'ensemble routier de la figure 1 faisant apparaître en hachuré les zones de débattements verticaux Z1 et longitudinaux Z2 de la remorque;
- la figure 9 est une vue schématique arrière de l'ensemble routier de la figure 1, illustrant le positionnement du châssis de la remorque par rapport au châssis du véhicule tracteur ;
- la figure 10 est une vue de dessus du châssis de la remorque de la figure 3, dont les longerons télescopiques ont été fixés longitudinalement en position pour s'adapter à un véhicule tracteur à châssis de grande longueur ;
- la figure 11 est une vue de coté d'un autre ensemble routier selon l'invention comprenant le châssis de remorque de la figure 10 équipé d'une carrosserie, et un véhicule tracteur à châssis de grande longueur ;
- la figure 12 est une vue de dessus du châssis de la remorque de la figure 3, dont les longerons télescopiques ont été fixés longitudinalement en position pour s'adapter à un véhicule tracteur à châssis de petite longueur ;
- la figure 13 est une vue de côté d'un autre ensemble routier selon l'invention comprenant le châssis de remorque de la figure 12 équipé d'une carrosserie, et un véhicule tracteur à châssis de petite longueur ;
- la figure 14 est une vue en perspective d'un ensemble routier selon un deuxième mode de réalisation de l'invention, comprenant une remorque carrossée équipée d'une suspension à lames de ressort en position accrochée sur un véhicule tracteur ;
- la figure 15 est une vue partielle de côté des châssis du véhicule tracteur et de la remorque de l'ensemble routier de la figure 14 ;
- la figure 16 est une vue schématique en perspective d'un support de roue et d'une roue de la remorque de l'ensemble routier de la figure 14 ; et,
- la figure 17 est une vue schématique en coupe selon un plan vertical transversal de l'ensemble routier de la figure 14.

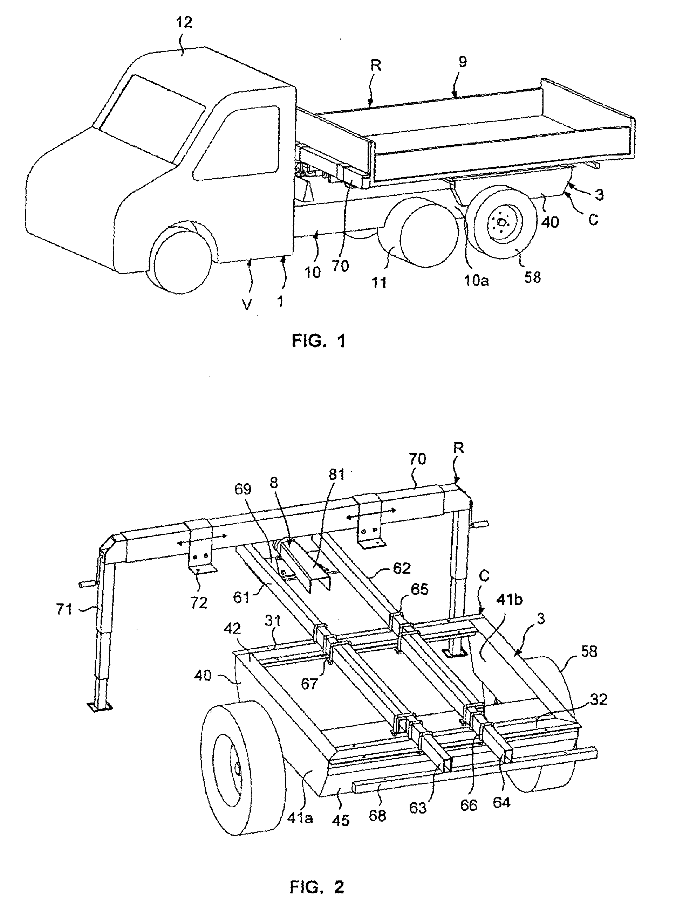

Les figures 1 à 9 illustrent un ensemble routier selon l'invention comprenant un véhicule tracteur, de type véhicule utilitaire, et une remorque, et dont le châssis de remorque peut d'une part, s'atteler à cheval sur la partie arrière d'un grand nombre de véhicules utilitaires 3,5T de type châssis cabine existant sur le marché quels que soient leurs empattements, leurs voies et leurs formes et, d'autre part, être équipé de tout modèle de carrosserie dont la longueur, la largeur et la charge utile sont compatibles avec celles autorisées ou possibles pour les ensembles routiers ainsi formés. La construction simple du châssis et son caractère universel permet une fabrication en série.

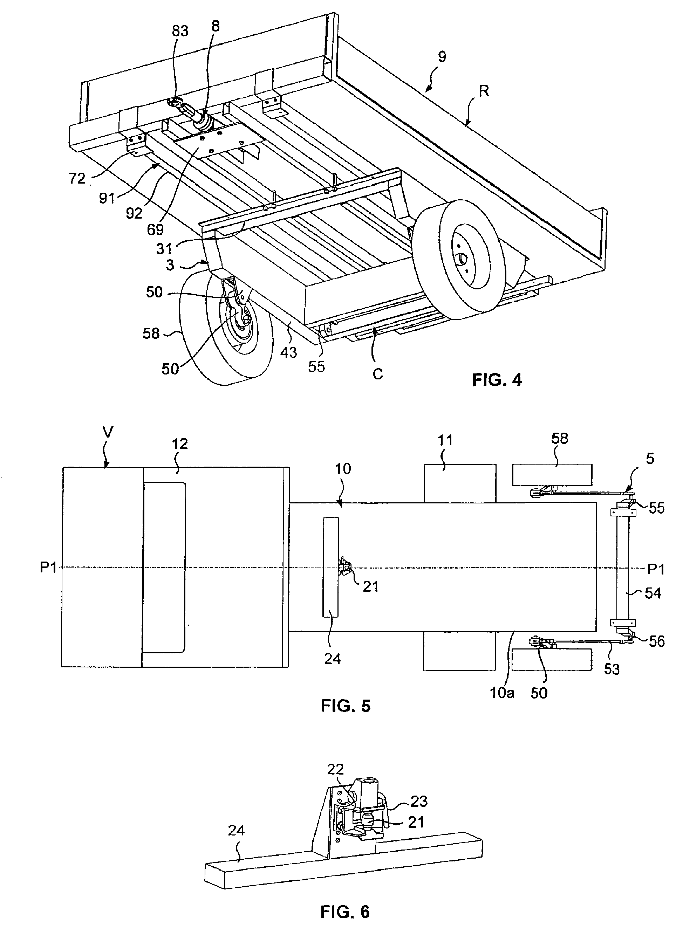

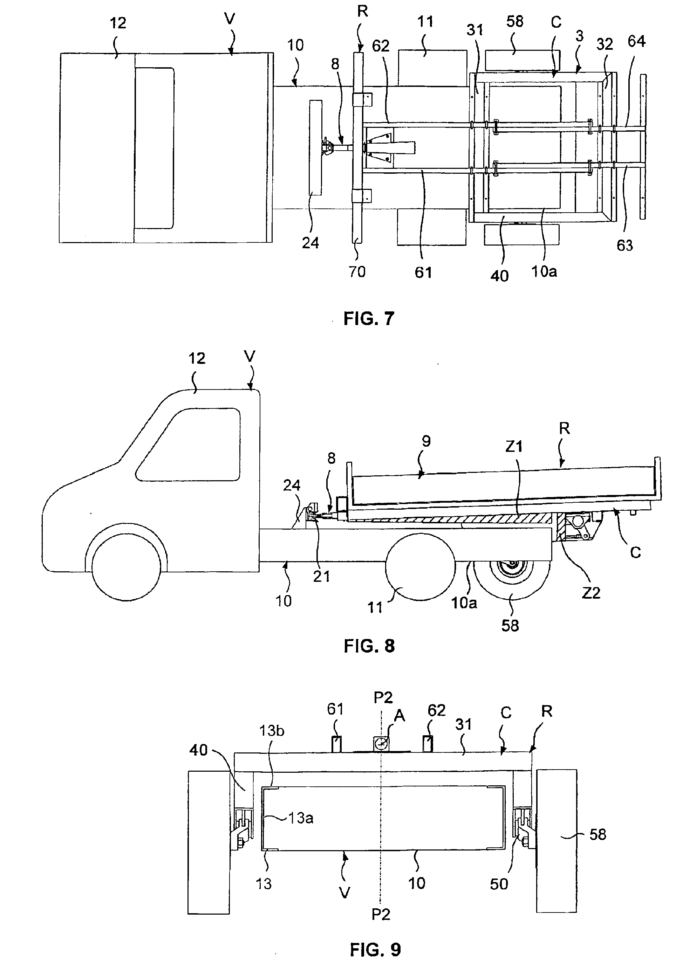

En référence à la figure 1, le véhicule tracteur V comprend un châssis cabine 1, sur lequel sont montés un essieu directionnel avant et un essieu arrière portant des roues arrière 11, l'essieu arrière étant par exemple de type rigide, propulseur ou non, avec un système de suspension à lames de ressort disposées longitudinalement ou de type à bras tirés avec un système de suspension à barres de torsion, ces deux types étant connus en soi. Le châssis porte en partie avant une cabine 12 et le système de motorisation du véhicule. Le châssis 10 présente un plan longitudinal de symétrie vertical représenté sur la figure 5 sous la référence P1 et est formé par exemple de deux longerons 13, représentés schématiquement sur la figure 9, reliés parallèlement entre eux par plusieurs traverses (non représentées). Chaque longeron a une section transversale en U couché, avec un flanc 13a disposé verticalement et des ailes 13b horizontales orientées vers l'intérieur. Chaque longeron peut également être de type caisson creux de section sensiblement rectangulaire. Il possède dans ce cas un côté extérieur vertical et deux côtés, supérieur et inférieur, horizontaux. Le châssis présente une partie dite arrière 10a qui s'étend en arrière des roues arrière 11.

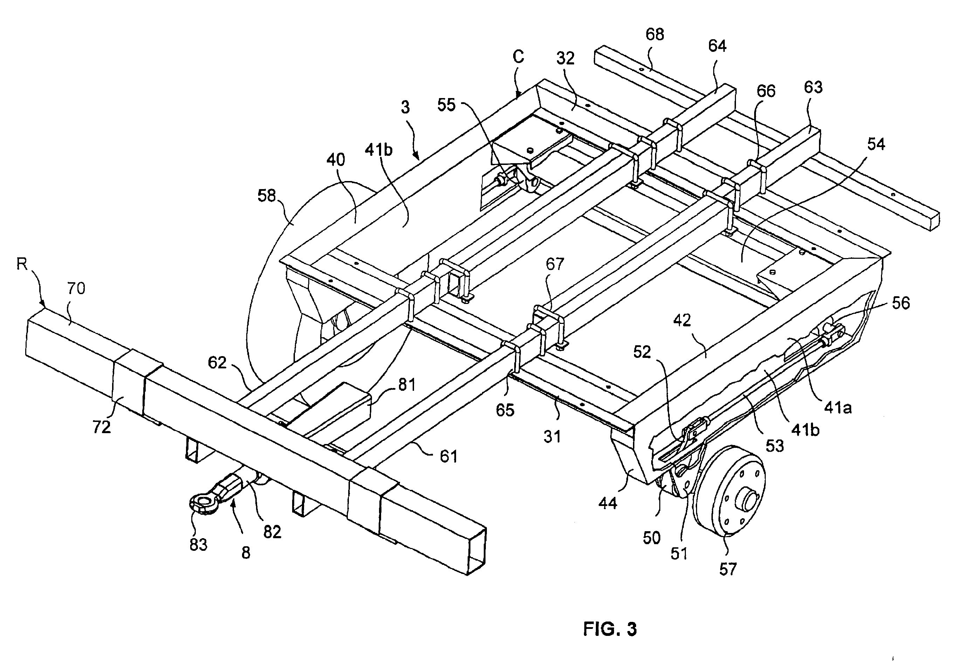

En référence aux figures 2 et 3, la remorque R selon l'invention comprend un châssis C comportant une partie dite centrale 3 portant les roues 58 de la remorque et comprenant deux supports de roue sous la forme de longerons support 40 reliés entre eux par une traverse avant 31 et une traverse arrière 32. Lesdits longerons support sont de type tubulaire à section transversale rectangulaire, formés de deux parois latérales verticales, dite extérieure 41 a et intérieure 41b, rigides reliées entre elles par une paroi supérieure 42 et une paroi inférieure 43 (Fig. 4), l'extrémité avant de chaque longeron étant fermée par une paroi avant 44, une paroi arrière 45 disposée sous la traverse arrière venant fermer les extrémités arrière des longerons support.

Chaque roue 58 est montée sur un longeron support au moyen d'un bras oscillant 50 ou bras de suspension, monté pivotant par une extrémité sous la paroi inférieure du longeron, entre deux pattes verticales 51, autour d'un axe de rotation horizontal, et portant à son autre extrémité le moyeu 57 d'une roue. Les bras oscillants sont incurvés vers l'extérieur de manière à porter le moyeu et sa roue du côté extérieur de la paroi latérale extérieure 41a. Les bras oscillants sont de type tirés, ils s'étendent vers l'arrière depuis leur axe de rotation.

Chaque bras oscillant est solidaire en rotation d'un bras 52 auquel est monté articulée une première extrémité d'une biellette 53. Les secondes extrémités des biellettes sont montées articulées aux extrémités d'un dispositif élastique 54 disposé en partie arrière de la partie centrale. Les bras 52 passent par des ouvertures de la paroi inférieure 43 et s'étendent à l'intérieur des longerons support. Les biellettes disposées dans les longerons support sont articulées aux extrémités du dispositif élastique 54 monté entre les longerons support 40. A titre d'exemple, le dispositif élastique 54 est formé d'un essieu classique de remorque dit à profilé caoutchouc, comprenant un tube carré ou sensiblement triangulaire fixe, monté entre les longerons support, dans lequel est monté à 45° un petit tube carré ou sensiblement triangulaire, ainsi que quatre ou trois profilés caoutchouc. Les extrémités du petit tube carré portent des bras 55 munis d'axes transversaux 56 auxquels sont articulées les biellettes 53. Les bras oscillants 50, les bras 52, les biellettes 53 et le dispositif élastique forment le système de suspension 5 (Fig. 5) de la remorque.

Le châssis comprend en outre une paire de longerons avant 61, 62 télescopiques et une paire de longerons arrière 63, 64 télescopiques. Les longerons avant sont fixés par des premiers moyens de fixation 65, par exemple des cavaliers en U, sur la traverse avant 31. Les deux longerons avant sont fixés symétriquement de part et d'autre du plan longitudinal vertical P2 (Fig. 9) de la remorque. Ces longerons avant s'étendent en avant de la partie centrale et portent à leur extrémité avant un timon d'attelage axial de type coulissant à freinage par inertie, dit timon coulissant 8, par l'intermédiaire d'une plaque de fixation 69. Les longerons arrière télescopiques sont fixés par des seconds moyens de fixation 66 sur la traverse arrière 32. Ils s'étendent vers l'arrière du châssis de la remorque et sont disposés symétriquement de part et d'autre du plan de symétrie P, entre les longerons avant. Chaque longeron arrière est disposé contre un longeron avant, auquel il est assemblé par des moyens d'assemblage 67 au niveau de son extrémité avant et au niveau de l'extrémité arrière du longeron avant. Les extrémités arrière des longerons arrière sont avantageusement reliées par une traverse arrière 68.

Une traverse support avant 70 est fixée rigidement sur le dessus de la partie avant des longerons avant. La traverse support avant porte en extrémité des béquilles latérales 71, démontables, repliables ou escamotables, qui supportent le poids avant de la remorque lorsque celle-ci est dételée. La traverse support avant 70 porte également deux supports 72 étroits fixés rigidement sur la traverse avant, réglables transversalement lors du carrossage et destinés à recevoir la fixation des extrémités avant du faux-châssis de la carrosserie.

Le châssis C peut être équipé de différents types de carrosserie, par exemple d'une benne 9, basculante ou non basculante, tel qu'illustré sur les figures 1 et 4. La benne 9 est fixée par les longerons 92 de son faux-châssis 91 directement sur les traverses avant 31 et arrière 32 de la partie centrale et sur les supports 72 de la traverse support avant, comme visible sur la figure 4.

Les longerons télescopiques sont fixés à un entraxe tel que l'encombrement latéral extérieur des longerons, leurs moyens de fixation compris, soit inférieur à la distance séparant les faces intérieures des longerons 13 de châssis de véhicule utilitaire de type châssis cabine les plus étroits disponibles sur le marché, afin de permettre la fixation du faux châssis de la carrosserie, non pas sur les longerons du châssis de la remorque comme cela est réalisé de façon classique, mais sur les traverses avant et arrière qui supportent les longerons du châssis de la remorque. Grâce à cette disposition, les traverses du châssis de la remorque peuvent recevoir la fixation de différents faux châssis de carrosserie, quelles que soient leurs largeurs. Par ailleurs, la hauteur de chargement est plus basse car diminuée d'une valeur correspondant à la hauteur des longerons du châssis.

Le timon coulissant 8 est disposé selon le plan longitudinal vertical P2 de la remorque. Le timon coulissant comprend une première partie fixe qui est solidaire du châssis de la remorque, à l'avant de celui-ci, et une partie mobile destiné à être accrochée à un véhicule tracteur pour l'utilisation de la remorque. En référence aux figures 3 et 4, la partie fixe est formée d'un corps tubulaire fixe 81 qui est fixé sur une plaque inférieure 69 montée entre les deux parties d'extrémité avant des longerons avant 61 et 62. La partie mobile est formée d'une barre tubulaire mobile 82 qui est montée coulissante par une première extrémité dans le passage interne du corps fixe. Sa deuxième extrémité, dite extrémité libre, est équipée de moyens d'accrochage pour l'accrochage de la remorque à un véhicule tracteur, tel qu'un anneau d'accrochage 83. La barre mobile est disposée sous la traverse support avant 70, de sorte que son anneau d'accrochage reste en avant de ladite traverse dans la position rétractée de la barre mobile. De manière connue, la barre mobile est munie de moyens de retenue coopérant avec des moyens de retenue complémentaires du corps fixe pour retenir la barre mobile dans le corps fixe, ces moyens de retenue (non représentés) définissent une position déployée maximale de la barre mobile, dans laquelle la barre mobile est avantageusement sollicitée élastiquement par des moyens de rappel élastique appropriés. La remorque est équipée d'un dispositif de freinage par inertie commandé par l'inertie de la remorque, à savoir par le rapprochement de la remorque et du véhicule tracteur. Le déplacement de la barre mobile commande, via un système de transmission, par exemple de type tringlerie ou hydraulique, l'activation de moyens de freinage disposés au niveau des roues. A titre d'exemple, le système de transmission comprend un levier monté pivotant sur le châssis. La barre mobile est reliée par une tringle à un premier bras du levier. Le deuxième bras du levier est connecté par une tringle à des câbles reliés aux segments de freins disposés dans les tambours des roues. Lors du freinage du véhicule tracteur, la barre mobile qui se rétracte tire alors, via le levier et les tringles, sur les câbles reliés aux segments de freins.

Pour l'attelage de la remorque, le châssis du véhicule tracteur comprend des moyens d'accrochage formé ici d'une broche 21 montée sur une chape 22 et actionnable par un levier 23, connus en soi. Tel qu'illustré à la figure 6, la chape 22 est montée de manière réglable en hauteur sur une traverse support 24 fixée par des moyens de fixation sur le châssis du véhicule tracteur.

L'ensemble routier comprend en outre un dispositif de guidage axial, tel que décrit dans les documents brevet précités, pour maintenir l'axe longitudinal médian A (Fig. 9) de la remorque sensiblement dans le plan longitudinal vertical du véhicule tracteur. Selon un mode de réalisation l'ensemble routier comprend un dispositif de guidage axial tel que décrit dans la demande de brevet déposée par la demanderesse le même jour que la présente demande et ayant pour titre « Dispositif de guidage axial pour ensemble routier comprenant un véhicule tracteur et une remorque à timon coulissant ». Les premiers moyens de guidage comprennent deux premiers éléments de guidage, de préférence identiques, montés symétriquement sur le châssis du véhicule tracteur, de part et d'autre de son plan longitudinal vertical, en arrière de son essieu arrière et de chaque côté extérieur dudit châssis, et
- lesdits seconds moyens de guidage comprennent deux seconds éléments de guidage, de préférence identiques, montés symétriquement sur le châssis de la remorque, de part et d'autre de son plan longitudinal vertical et en vis-à-vis, par exemple montés sur les parois latérales verticales intérieure 41b des longerons support ou constitués par lesdites parois latérales verticales,
- chaque second élément de guidage étant apte à venir sensiblement en contact par une surface active de contact avec une surface active de contact d'un premier élément de guidage dans un plan de contact sensiblement vertical qui est extérieur au châssis du véhicule tracteur et intérieur au châssis de la remorque.

En position accrochée, tel qu'illustré aux figures 1, 8, 9, 11, 13, 14, 15, 17, et plus particulièrement à la figure 7, la partie centrale 3 du châssis C vient à cheval sur la partie arrière 10a du châssis du véhicule tracteur, sans contact avec ce dernier. La traverse avant 31 est disposée au-dessus du châssis 10, et les longerons support 40 viennent se positionner de part et d'autre du châssis 10, le long des parties arrière 10a dudit châssis du véhicule tracteur, juste en arrière de ses roues arrière 11. Les longerons supports de roues 40 de la remorque viennent se positionner dans l'espace libre étroit existant en arrière des roues arrière 11 du véhicule tracteur, entre et le long de ses parties arrières 10a et des roues de la remorque 58 dont les flancs extérieurs sont sensiblement alignés avec ceux des roues 11 du véhicule tracteur. Les roues de la remorque sont sensiblement alignées avec les roues arrière du véhicule tracteur présentant la voie la plus importante et sont positionnées au plus près de ces dernières.

Les longerons support 40, intercalés entre les roues de la remorque 58 et les parties arrière du châssis du véhicule tracteur 10a, comprennent des parois latérales 41a, 41b minces très rigides afin de compenser l'étroitesse de l'espace disponible. Avantageusement, lesdites parois sont démontables et peuvent exister en plusieurs hauteurs, de façon à pouvoir ajuster, si nécessaire, la hauteur du châssis de la remorque, en fonction du choix de l'essieu ou des dimensions de roues, à la hauteur du châssis du véhicule tracteur.

La figure 8 illustre les zones de débattement de suspension et de freinage, respectivement Z1 et Z2. La traverse 24 portant les moyens d'accrochage 21 à hauteur réglable, associée à des longerons support à parois latérales minces amovibles et à hauteur variable, permettent de régler la hauteur libre juste suffisante sous la remorque de façon que, lorsque celle-ci est attelée en charge à cheval sur l'arrière du véhicule tracteur, le libre débattement des suspensions de la remorque et du véhicule tracteur soit assuré sans que les châssis de ceux-ci ne puissent se percuter en fonctionnement normal, les mouvements extrêmes étant par exemple sécurisés par des butées élastiques montées soit sur le châssis du véhicule tracteur soit sur le châssis de la remorque qui viennent en appui sur des éléments rigides liés respectivement soit au châssis de la remorque soit au châssis du véhicule tracteur.

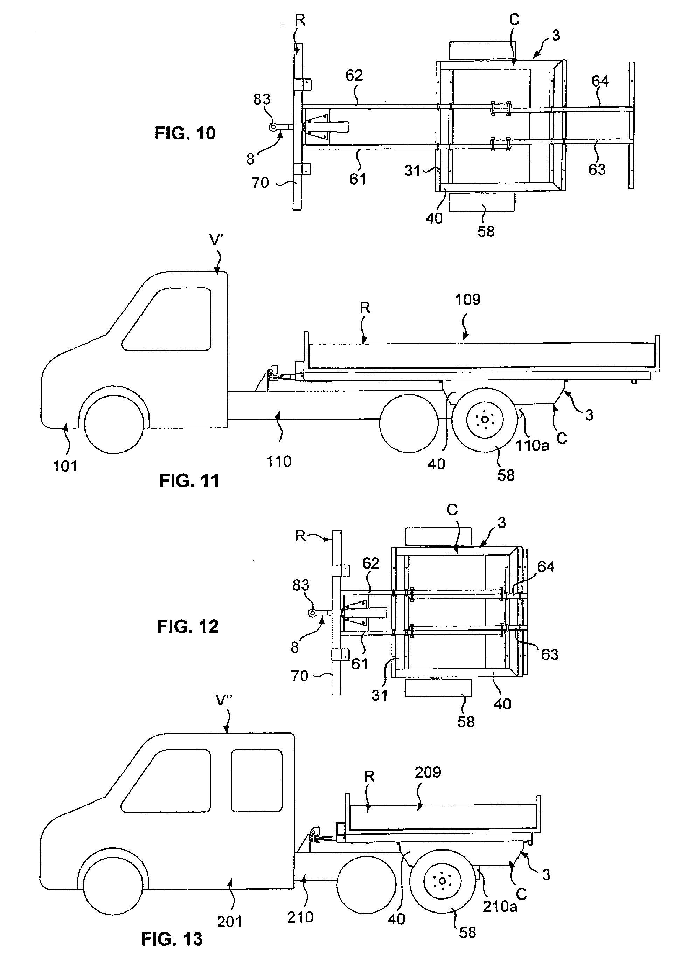

Les figures 10 à 13 illustrent deux exemples de réglage longitudinaux différents des longerons télescopiques 61-62 et 63-64, afin d'adapter ledit châssis C de la remorque R décrit précédemment à des carrosseries 109, 209 de longueurs différentes et à des châssis cabine 101, 201 de véhicule tracteur V', V" de longueurs de châssis 110, 210 différentes, la partie centrale 3 du châssis de la remorque étant toujours à cheval au-dessus des parties arrière 110a et 210a des châssis des véhicules tracteur.

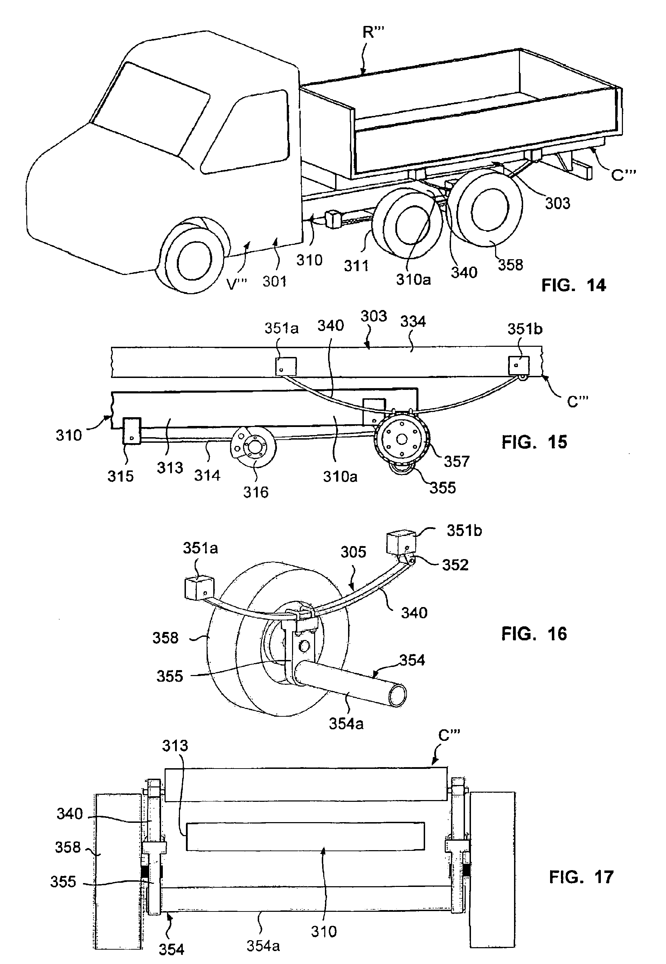

Les figures 14 à 17 illustrent un ensemble routier selon un deuxième mode de réalisation de l'invention dans lequel les supports de roue verticaux de la remorque sont formés par des éléments du système de suspension des roues.

Le véhicule tracteur V"' comprend un châssis cabine 301 possédant un châssis 310, comprenant deux longerons 313, de section transversale en U, sur lesquels est notamment monté un essieu arrière portant des roues arrière 311, l'essieu arrière étant équipé d'un système de suspension à lames. Le système de suspension comprend au moins une lame de suspension 314 disposée longitudinalement le long de chaque longeron. Chaque longeron a une section transversale en U, avec une base disposée verticalement et des branches horizontales orientées vers l'intérieur. Chaque lame de suspension est fixée par ses extrémités à un longeron, au moyen de chapes 315 qui sont fixées sur le côté extérieur de la base d'un longeron, et auxquelles les extrémités de la lame sont assemblées de manière pivotante autour d'axes transversaux. Le corps central de l'essieu arrière porte à chaque extrémité le moyeu 316 d'une roue arrière 311, et est fixée sur la partie centrale de chaque lame de suspension 314. Le châssis présente une partie dite arrière 310a qui s'étend derrière les roues arrière 311.

La remorque R"' comprend un châssis C"' comportant une partie centrale 303 portant les deux roues 358 de la remorque. Cette partie centrale comprend deux longerons 334 portant deux supports de roue formés ici par les lames de suspension 340 longitudinales d'un système de suspension 305. Chaque roue 358 est montée à l'extrémité d'un essieu transversal 354 rigide dont l'axe du corps central 354a est situé plus bas que l'axe des roues, et l'essieu transversal est relié au châssis par les lames de suspension longitudinales fixées aux longerons de la partie centrale.

En référence aux figures 15 et 16, chaque support de roue comprend au moins une lame de suspension longitudinale 340, chaque lame de suspension est fixée par ses extrémités à un longeron 334, au moyen d'une chape avant 351a et d'une chape arrière 351b. Les chapes sont fixées sur le côté extérieur du longeron. L'extrémité avant de la lame de suspension est assemblée de manière pivotante autour d'un axe transversal sur la chape avant et l'extrémité arrière de la lame est fixée pivotante autour d'un axe transversal à une première extrémité d'un bras 352, ce dernier étant monté pivotant par sa deuxième extrémité sur la chape arrière 351b autour de son axe transversal. Un bras d'essieu sensiblement vertical 355 est monté par une première extrémité basse à chaque extrémité du corps central 354a. Chaque bras d'essieu est monté par son autre extrémité haute sur la partie centrale d'une lame de suspension, et porte entre ses extrémités le moyeu 357 d'une roue 358.

Comme précédemment, le châssis C"' de la remorque R"' est équipé d'un timon coulissant portant en extrémité avant des moyens d'accrochage coopérant avec des moyens d'accrochage complémentaires du véhicule tracteur, et l'ensemble routier comprend un dispositif de guidage axial, pour maintenir l'axe longitudinal médian de la remorque sensiblement dans le plan longitudinal vertical du véhicule tracteur.

Dans la position accrochée de la remorque, la partie centrale 303 de celle-ci, comprenant ses longerons 334 et les lames de suspension 340, vient à cheval sur la partie arrière 310a du châssis 310 du véhicule tracteur. Les lames de suspension s'étendent le long de la partie arrière 310a des longerons 313 du châssis du véhicule tracteur. Le corps central, situé sous la partie arrière 310a du châssis du véhicule tracteur, est disposé plus bas que l'axe des roues de façon à ne pas venir heurter la partie inférieure de la partie arrière 310a du châssis lors des mouvements de suspension.

En variante, les lames de suspension précitées sont fixées par leur partie centrale aux longerons de la partie centrale du châssis de la remorque et s'étendent vers le bas depuis leur partie centrale. Les extrémités avant et arrière des lames de suspension portent des essieux tandem de type bogie. En position accrochée, l'essieu de la remorque le plus en avant vient sous le châssis du véhicule tracteur.

## Revendications

1. Ensemble routier comprenant
- un véhicule tracteur (V, V', V",V"') comprenant un châssis (10, 110, 210, 310) sur lequel sont montés au moins un essieu avant portant des roues avant et un essieu arrière portant des roues arrière (11, 311),
- une remorque (R, R"') comprenant un châssis (C, C"') sur lequel sont montées au moins deux roues (58, 358),
- un dispositif d'attelage comprenant des moyens d'accrochage (21) montés sur le châssis (10, 110, 210, 310) du véhicule tracteur, en avant de l'essieu arrière, aptes à coopérer avec des moyens d'accrochage (83) complémentaire de la remorque pour accrocher la remorque au véhicule tracteur dans une position dite accrochée de la remorque de sorte que la remorque soit articulée sur le véhicule tracteur au moins autour d'un axe transversal de tangage sensiblement horizontal passant par le point d'accrochage situé en avant de l'essieu arrière du véhicule tracteur, et,
- un dispositif dit de guidage axial comprenant des premiers moyens de guidage montés sur le véhicule tracteur, aptes à coopérer dans la position accrochée de la remorque avec des seconds moyens de guidage complémentaires montés sur la remorque pour maintenir l'axe longitudinal médian (A) de la remorque sensiblement dans le plan longitudinal vertical (P1) du véhicule tracteur,
**caractérisé en ce que**
- la remorque (R, R"') comprend au moins un timon coulissant (8) à freinage par inertie, ledit timon coulissant comportant une partie fixe (81) montée de manière fixe à l'avant du châssis (C) et une partie mobile (82) montée dans la partie fixe de manière coulissante, et munie à son extrémité libre avant desdits moyens d'accrochage (83) complémentaires,
- ledit châssis (C, C"') de la remorque comprenant une partie dite centrale (3, 303) portant de chaque côté un support de roue vertical (40, 340), chaque support de roue vertical portant latéralement, du côté extérieur, de manière rotative, au moins une roue (58, 358), la partie avant de ladite partie centrale (3) étant disposée au-dessus de la partie arrière du châssis (10a, 110a, 210a, 310a) du véhicule tracteur dans la position accrochée de la remorque, avec chaque support de roue vertical (40, 340) disposé du côté extérieur du châssis du véhicule tracteur, juste en arrière d'une roue (11, 311) de son essieu arrière.

2. Ensemble routier selon la revendication 1, **caractérisé en ce que** ladite partie centrale (3) du châssis est formée d'au moins une traverse dite avant (31) et des deux supports de roue verticaux (40) montés aux extrémités de ladite traverse avant, la traverse avant (31) étant disposée dans la position accrochée de la remorque au-dessus du châssis (10, 110, 210) du véhicule tracteur.

3. Ensemble routier selon la revendication 2, **caractérisé en ce que** ladite partie centrale (3) comprend en outre une traverse arrière (32), chaque support de roue vertical est formé d'un longeron support (40) monté entre ladite traverse avant (31) et ladite traverse arrière (32).

4. Ensemble routier selon la revendication 3, **caractérisé en ce que** chaque support de roue est formé d'un longeron support creux (40) comprenant deux parois latérales verticales (41a, 41b), une paroi supérieure (42) et/ou une paroi inférieure (43).

5. Ensemble routier selon l'une des revendications 2 à 4, **caractérisé en ce que** chaque roue (58) est montée sur un support de roue vertical au moyen d'un bras oscillant (50), monté pivotant en partie inférieure du support de roue vertical (40) autour d'un axe de pivotement transversal.

6. Ensemble routier selon la revendication 5, **caractérisé en ce que** ladite remorque (R) comprend un système de suspension (5) comprenant lesdits bras oscillant (50) reliés par des biellettes (53) à un dispositif élastique (54) déporté vers l'arrière du châssis (C) de la remorque.

7. Ensemble routier selon la revendication 6 ou 7, **caractérisé en ce que** lesdits bras oscillants sont de type poussés, chaque bras oscillant s'étendant vers l'avant de la remorque depuis son axe de pivotement en partie inférieure du support de roue vertical (40).

8. Ensemble routier selon la revendication 1, **caractérisé en ce que** lesdits supports de roue verticaux sont formés par les lames de suspension (340) longitudinales d'un système de suspension (305), chaque roue (358) est montée à l'extrémité d'un essieu transversal (354) rigide relié aux lames de suspension longitudinales, le corps central (354a) dudit essieu transversal étant disposé sous le châssis (310) du véhicule tracteur (V"') dans la position accrochée de la remorque.

9. Ensemble routier selon la revendication 8, **caractérisé en ce que** chaque support de roue vertical (340) comprend au moins une lame de suspension fixée par ses extrémités à un longeron (334) de la partie centrale (303) du châssis (C"') de la remorque (R"'), le corps central (354a) de l'essieu transversal portant à chaque extrémité un bras d'essieu (355) sensiblement vertical sur lequel est monté une roue (358) et par lequel l'essieu transversal est fixé à la partie centrale des lames de suspension (340).

10. Ensemble routier selon l'une des revendications 1 à 9, **caractérisé en ce que** le châssis (C) de la remorque (R) comprend au moins un longeron (61, 62) de type télescopique par rapport à la partie centrale, réglable longitudinalement sur la partie centrale (3) portant les roues et apte à être fixé rigidement longitudinalement en position sur la partie centrale par des moyens de fixation (65).

11. Ensemble routier selon l'une des revendications 1 à 10, **caractérisé en ce que** le châssis (C) de la remorque (R) comprend une première paire de longerons avant (61, 62), le timon coulissant (8) étant monté axialement entre les extrémités avant desdits longerons avant.

12. Ensemble routier selon la revendication 11, **caractérisé en ce que** le châssis (C) de la remorque comprend une traverse support d'extrémité avant (70), liée rigidement par sa partie inférieure à la partie supérieure des longerons avant (61, 62) du châssis de la remorque.

13. Ensemble routier selon la revendication 11 ou 12, **caractérisé en ce que** ledit châssis de la remorque est équipé d'une carrosserie (9) munie d'un faux-châssis (91), les longerons (92) du faux-châssis étant fixés directement sur des traverses (31, 32, 70, 68) du châssis de la remorque, de chaque côté des longerons (61, 62 ; 63, 64) dudit châssis, l'entraxe entre les longerons (61, 62 ; 63, 64) d'une paire de longerons du châssis de la remorque étant au maximum égal à l'entraxe des longerons du véhicule tracteur.

14. Ensemble routier selon l'une des revendications 1 à 13, **caractérisé en ce que** le châssis (10, 110, 210, 310) du véhicule tracteur (V, V', V", V"') comprend une barre anti-encastrement arrière munie de parties d'extrémités latérales escamotables.

15. Remorque (R, R"') comprenant un châssis (C, C"') sur lequel sont montés
- au moins deux roues (58, 358),
- des moyens d'accrochage (83) aptes à coopérer avec des moyens d'accrochage complémentaires d'un véhicule tracteur pour accrocher la remorque en avant de l'essieu arrière dudit véhicule tracteur dans une position dite accrochée de la remorque, et
- des moyens de guidage aptes à coopérer dans la position accrochée de la remorque avec des moyens de guidage complémentaires montés sur le véhicule tracteur pour maintenir l'axe longitudinal médian (A) de la remorque sensiblement dans le plan longitudinal vertical (P1) du véhicule tracteur,
**caractérisée en ce que**
- la remorque (R) comprend au moins un timon coulissant (8) à freinage par inertie, ledit timon coulissant comportant une partie fixe (81) montée de manière fixe à l'avant du châssis (C) et une partie mobile (82) montée dans la partie fixe de manière coulissante, et munie à son extrémité libre desdits moyens d'accrochage (83),
- ledit châssis (C, C"') de la remorque comprenant une partie dite centrale (3, 303) portant de chaque côté un support de roue vertical (40, 340), chaque support de roue vertical portant latéralement, du côté extérieur, de manière rotative, au moins une roue (58, 358), ladite partie centrale étant apte à être disposée dans la position accrochée de la remorque au-dessus du châssis (10, 110, 210, 310) du véhicule tracteur, avec chaque support de roue vertical (40, 340) disposé du côté extérieur du châssis du véhicule tracteur, juste en arrière d'une roue (11, 311) de l'essieu arrière.

## Claims

1. Vehicle combination comprising
- a towing vehicle (V, V', V", V'") comprising a chassis (10, 110, 210, 310) on which at least one front axle with front wheels and one rear axle with rear wheels (11, 311) are mounted,
- a trailer (R, R"') comprising a chassis (C, C"') on which at least two wheels (58, 358) are mounted,
- a coupling device comprising attachment means (21) mounted on the chassis (10, 110, 210, 310) of the towing vehicle, in front of the front axle, capable of cooperating with a corresponding attachment means (83) of the trailer in order to attach the trailer to the towing vehicle in a so-called connected position of the trailer so that the trailer is articulated on the towing vehicle at least around a transverse axis of substantially horizontal pitch passing through the point of attachment located in front of the rear axle of the towing vehicle, and,
- a so-called axial guiding device comprising first guiding means mounted on the towing vehicle, capable of cooperating in the connected position of the trailer with corresponding second guiding means mounted on the trailer in order to maintain the median longitudinal axis (A) of the trailer substantially in the vertical longitudinal plane (P1) of the towing vehicle,
**characterised in that**
- the trailer (R, R"') comprises at least one sliding drawbar (8) with overrun braking, said sliding drawbar comprising a fixed part (81) mounted in a fixed manner at the front of the chassis (C) and a movable part (82) mounted in the fixed part in a sliding manner, and fitted with said corresponding attachment means (83) on its front free end,
- said chassis (C, C"') of the trailer comprising a so-called central part (3, 303) having a vertical wheel support (40, 340) on each side, each vertical wheel support having laterally, on the external side, in a rotary manner, at least one wheel (58, 358), the front part of the said central part (3) being arranged above the rear part of the chassis (10a, 110a, 210a, 310a) of the towing vehicle in the connected position of the trailer, with each vertical wheel support (40, 340) arranged on the external side of the frame of the towing vehicle, just behind a wheel (11, 311) of its rear axle.

2. Vehicle combination according to claim 1, **characterised in that** said central part (3) of the chassis is formed by at least one so-called front crosspiece (31) and by two vertical wheel supports (40) mounted at the extremities of said front crosspiece, the front crosspiece (31) being arranged in the connected position of the trailer above the chassis (10, 110, 210) of the towing vehicle.

3. Vehicle combination according to claim 2, **characterised in that** the said central part (3) also comprises a rear crosspiece (32), each vertical wheel support is formed by a supporting longitudinal member (40), mounted between the said front crosspiece (31) and the said rear crosspiece (32).

4. Vehicle combination according to claim 3, **characterised in that** each wheel support is formed by a hollow supporting longitudinal member (40) comprising two vertical side walls (41a, 4 1 b), an upper wall (42) and/or a lower wall (43).

5. Vehicle combination according to one of claims 2 to 4, **characterised in that** each wheel (58) is mounted on a vertical wheel support by means of a swing arm (50), pivotally mounted on the lower part of the vertical wheel support (40) around a transverse pivot axis.

6. Vehicle combination according to claim 5, **characterised in that** the said trailer (R) comprises a suspension system (5) comprising the said swing arms (50) connected by connecting rods (53) to a resilient device (54) offset towards the rear of the chassis (C) of the trailer.

7. Vehicle combination according to claim 6 or 7, **characterised in that** the said swing arms are pushed swing arms, each swing arm extending towards the front of the trailer from its pivot axis in the lower part of the vertical wheel support (40).

8. Vehicle combination according to claim 1, **characterised in that** the said vertical wheel supports are formed by the longitudinal suspension leaf springs (340) of a suspension system (305), each wheel (358) is mounted at the end of a rigid transverse axle (354) connected to the longitudinal leaf springs, the central body (354a) of the transverse axle being arranged beneath the chassis (310) of the towing vehicle (V"') in the connected position of the trailer.

9. Vehicle combination according to claim 8, **characterised in that** each vertical wheel support (340) comprises at least one suspension leaf spring fixed by its extremities to a longitudinal member (334) of the central part (303) of the chassis (C"') of the trailer (R"'), the central body (354a) of the transverse axle having a substantially vertical axle arm (355) on each end, on which a wheel (358) is mounted and by which the transverse axle is fixed to the central part of the suspension leaf springs (340).

10. Vehicle combination according to any one of claims 1 to 9, **characterised in that** the chassis (C) of the trailer (R) comprises at least one telescopic longitudinal member (61, 62) relative to the central part, longitudinally adjustable on the central part (3) having wheels and capable of being rigidly and longitudinally fixed in position on the central part with fixing means (65).

11. Vehicle combination according to any one of claims 1 to 10, **characterised in that** the chassis (C) of the trailer (R) comprises a first pair of front longitudinal members (61, 62) the sliding drawbar (8) being mounted axially between the front extremities of the front longitudinal members.

12. Vehicle combination according to claim 11, **characterised in that** the chassis (C) of the trailer comprises a transverse support crosspiece on its front extremity (70), rigidly connected by its lower part to the upper part of the front longitudinal members (61, 62) of the chassis of the trailer.

13. Vehicle combination according to claim 11 or 12, **characterised in that** the said chassis of the trailer is equipped with a body (9) fitted with a sub-frame (91), the longitudinal members (92) of the sub-frame being directly fixed on the crosspieces (31, 32, 70, 68) of the chassis of the trailer, on each side of the longitudinal members (61, 62, 63, 64) of the said chassis, the axle spread between the longitudinal members (61, 62, 63, 64) of a pair of longitudinal members of the chassis of the trailer being at most equal to the axle spread between the longitudinal members of the towing vehicle.

14. Vehicle combination according to any one of claims 1 to 13, **characterised in that** the chassis (10, 110, 210, 310) of the towing vehicle (V, V', V", V"') comprises a rear underrun protective bar fitted with parts with retractable side extremities.

15. Trailer (R, R''') comprising a chassis (C, C"') on which the following are mounted
- at least two wheels (58, 358)
- attachment means (83) capable of cooperating with complementary attachment means of a towing vehicle in order to attach the trailer in front of the rear axle of the said towing vehicle in a said connected position of the trailer, and
- guiding means capable of cooperating in the connected position of the trailer with the corresponding guiding means mounted on the towing vehicle in order to maintain the median longitudinal axis (A) of the trailer substantially in the vertical longitudinal plane (P1) of the towing vehicle,
**characterised in that**
- the trailer (R) comprises at least one sliding drawbar (8) with overrun braking, said sliding drawbar comprising a fixed part (81) mounted in a fixed manner at the front of the chassis (C) and a movable part (82) mounted in the fixed part in a sliding manner, and fitted with said attachment means (83) on its front free extremity,
- the said chassis (C, C"') of the trailer comprising a so-called central part (3, 303) having a vertical wheel support (40, 340) on each side, each vertical wheel support bearing laterally, on the external side, in a rotary manner, at least one wheel (58, 358), the said central part being capable of being arranged in the connected position of the trailer above the chassis (10, 110, 210, 310) of the towing vehicle, with each vertical wheel support (40, 340) arranged on the external side of the chassis of the towing vehicle, just in front of one wheel (11, 311) of the rear axle.

## Patentansprüche

1. Lastkraftwagen umfassend:
- ein Zugfahrzeug (V, V', V", V"'), das ein Chassis (10, 110, 210, 310) aufweist, an dem mindestens eine Vorderachse, die Vorderräder trägt, und eine Hinterachse montiert sind, die Hinterräder (11, 311) trägt,
- einen Anhänger (R, R"'), der ein Chassis (C, C"') aufweist, an dem mindestens zwei Räder (58, 358) montiert sind,
- eine Kopplungsvorrichtung, die eine Kopplungseinrichtung (21) aufweist, die an dem Chassis (10, 110, 210, 310) des Zugfahrzeugs vor der Hinterachse montiert ist, die mit einer komplementären Kopplungseinrichtung (83) des Anhängers zusammenwirken kann, um den Anhänger an das Zugfahrzeug in einer angehängten Position des Anhängers zu koppeln, so dass der Anhänger an dem Zugfahrzeug mindestens um eine im Wesentlichen horizontale Schwenkquerachse angelenkt ist, die durch den Kopplungspunkt verläuft, der sich vor der Hinterachse des Zugfahrzeugs befindet, und
- eine axiale Führung, die eine erste Führungseinrichtung aufweist, die an das Zugfahrzeug montiert ist und in der gekoppelten Position des Anhängers mit einer zweiten komplementären Führungseinrichtung zusammenwirken kann, die am Anhänger montiert ist, um die Längsmittelachse (A) des Anhängers im Wesentlichen in der vertikalen Längsebene (P 1) des Zugfahrzeugs zu halten,
**dadurch gekennzeichnet, dass**
- der Anhänger (R, R"') mindestens eine Gleitdeichsel (8) mit einer Trägheitsbremsung aufweist, wobei die Gleitdeichsel einen stationären Teil (81), der stationär an der Vorderseite des Chassis (C) montiert ist, und einen beweglichen Teil (82) aufweist, der in dem stationären Teil gleitend montiert ist und an seinem vorderen freien Ende mit der komplementären Kopplungseinrichtung (83) versehen ist,
- wobei das Chassis (C, C"') des Anhängers einen zentralen Teil (3, 303) aufweist, der auf jeder Seite einen vertikalen Radträger (40, 340) trägt, wobei jeder vertikale Radträger seitlich an der Außenseite drehend mindestens ein Rad (58, 358) trägt, wobei der Vorderteil des zentralen Teils (3) oberhalb des hinteren Teils des Chassis (10a, 110a, 210a, 310a) des Zugfahrzeugs in der angehängten Position des Anhängers angeordnet ist, wobei jeder vertikale Radträger (40, 340) an der Außenseite des Chassis des Zugfahrzeugs unmittelbar hinter einem Rad (11, 311) dessen Hinterachse angeordnet ist.

2. Lastkraftwagen nach Anspruch 1, **dadurch gekennzeichnet, dass** der zentrale Teil (3) des Chassis aus mindestens einem vorderen Querträger (31) und zwei vertikalen Radträgem (40), die an Enden des vorderen Querträgers montiert sind, gebildet ist, wobei der vordere Querträger (31) in der angehängten Position des Anhängers oberhalb des Chassis (10, 110, 210) des Zugfahrzeugs angeordnet ist.

3. Lastkraftwagen nach Anspruch 2, **dadurch gekennzeichnet, dass** der zentrale Teil (3) ferner einen hinteren Querträger (32) aufweist, wobei jeder vertikale Radträger aus einem Längsträger (40) gebildet ist, der zwischen dem vorderen Querträger (31) und dem hinteren Querbalken (32) montiert ist.

4. Lastkraftwagen nach Anspruch 3, **dadurch gekennzeichnet, dass** jeder Radträger aus einem hohlen Längsträger (40) gebildet ist, der zwei vertikale Seitenwände (41 a, 41b), eine obere Wand (42) und/oder eine untere Wand (43) aufweist.

5. Lastkraftwagen nach einem der Ansprüche 2 bis 4, **dadurch gekennzeichnet, dass** jedes Rad (58) an einem vertikalen Radträger mittels eines Schwenkarms (50) montiert ist, der am unteren Teil des vertikalen Radträgers (40) drehbar um eine quer angeordnete Schwenkachse angebracht ist.

6. Lastkraftwagen nach Anspruch 5, **dadurch gekennzeichnet, dass** der Anhänger (R) ein Aufhängungssystem (5) umfasst, das den Schwenkarm (50) aufweist, der durch ein Schaltgestänge (53) mit einer Federvorrichtung (4), die zur Rückseite des Chassis (C) des Anhängers hin verlagert ist, fest verbunden ist.

7. Lastkraftwagen nach Anspruch 6 oder 7, **dadurch gekennzeichnet, dass** die Schwenkarme schubhebelartig sind, wobei sich jeder Schwenkarm ausgehend von dessen Schwenkachse im unteren Teil des vertikalen Radträgers (40) hin zur Vorderseite des Anhängers erstreckt.

8. Lastkraftwagen nach Anspruch 1, **dadurch gekennzeichnet, dass** die vertikalen Radträger durch longitudinale Aufhängungsblätter (340) eines Aufhängungssystems (305) gebildet sind, wobei jedes Rad (358) am Ende einer starren Querachse (354), die mit den Aufhängungsblättern verbunden ist, montiert ist, wobei der zentrale Körper (354a) der Querachse in der angehängten Position des Anhängers unter dem Chassis (310) des Zugfahrzeugs (V"') angeordnet ist.

9. Lastkraftwagen nach Anspruch 8, **dadurch gekennzeichnet, dass** jeder vertikale Radträger (340) mindestens ein Aufhängungsblatt aufweist, die an ihren Enden an einem Längsträger (334) des zentralen Teils (303) des Chassis (C"') des Anhängers (R"') befestigt ist, wobei der zentrale Körper (354a) der Querachse an jedem Ende einen im Wesentlichen vertikalen Achsenarm (355) trägt, an dem ein Rad (358) montiert ist, und durch den die Querachse am zentralen Teil der Aufhängungsblätter (340) befestigt ist.

10. Lastkraftwagen nach einem der Ansprüche 1 bis 9, **dadurch gekennzeichnet, dass** das Chassis (C) des Anhängers (R) mindestens einen bezüglich des zentralen Teils teleskopartigen Längsträger (61, 62) aufweist, der in Längsrichtung gegenüber dem zentralen Teil (3), der die Räder trägt, einstellbar ist und der mit Befestigungsmitteln (65) starr in Längsrichtung gegenüber dem zentralen Teil positioniert befestigt werden kann.

11. Lastkraftwagen nach einem der Ansprüche 1 bis 10, **dadurch gekennzeichnet, dass** das Chassis (C) des Anhängers (R) ein erstes Paar vordere Längsträger (61, 62) aufweist, wobei die Gleitdeichsel (8) axial zwischen den vorderen Enden der vorderen Längsträger montiert ist.

12. Lastkraftwagen nach Anspruch 11, **dadurch gekennzeichnet, dass** das Chassis (C) des Anhängers einen Querträger zum Stützen dessen vorderen Endes (70) umfasst, der starr mittels seinem unteren Teil mit dem oberen Teil der vorderen Längsträger (61, 62) des Chassis des Anhängers verbunden ist.

13. Lastkraftwagen nach Anspruch 11 oder 12, **dadurch gekennzeichnet, dass** das Chassis des Anhängers mit einer Karosserie (9) ausgestattet ist, die mit einem Zwischenchassis (91) versehen ist, wobei die Längsträger (92) des Zwischenchassis direkt an den Querträgern (31, 32, 70, 68) des Chassis des Anhängers auf jeder Seite der Längsträger (61, 62; 63, 64) des Chassis befestigt sind, wobei der Abstand zwischen dem Längsträger (61, 62; 63, 64) eines Paares Längsträger des Chassis des Anhängers maximal gleich dem Abstand der Längsträger des Zugfahrzeugs ist.

14. Lastkraftwagen nach einem der Ansprüche 1 bis 13, **dadurch gekennzeichnet, dass** das Chassis (10, 110, 210, 310) des Zugfahrzeugs (V, V', V", V"') eine hintere Unterfahrschutzstange aufweist, die mit einziehbaren seitlichen Endteilen versehen ist.

15. Anhänger (R, R"'), der ein Chassis (C, C"') aufweist, an dem Folgendes montiert ist
- mindestens zwei Räder (58, 358),
- eine Kopplungseinrichtung (83), die mit einer komplementären Kopplungseinrichtung eines Zugfahrzeugs zusammenwirken kann, um den Anhänger vor der Hinterachse des Zugfahrzeugs in einer angehängten Position des Anhängers zu koppeln, und
- eine Führungseinrichtung, die in der angehängten Position des Anhängers mit einer komplementären Führungseinrichtung, die am Zugfahrzeug montiert ist, zusammenwirken kann, um die Längsmittelachse (A) des Anhängers im Wesentlichen in der vertikalen Längsebene (P1) des Zugfahrzeugs zu halten,
**dadurch gekennzeichnet, dass**
- der Anhänger (R) mindestens eine Gleitdeichsel (8) mit einer Trägheitsbremsung aufweist, wobei die Gleitdeichsel einen stationären Teil (81), der stationär an der Vorderseite des Chassis (C) montiert ist, und einen beweglichen Teil (82) aufweist, der in dem stationären Teil gleitend montiert ist und an seinem freien Ende mit der Kopplungseinrichtung (83) versehen ist,
- wobei das Chassis (C, C"') des Anhängers einen zentralen Teil (3, 303) aufweist, der auf jeder Seite einen vertikalen Radträger (40, 340) trägt, wobei jeder vertikale Radträger seitlich an der Außenseite drehend mindestens ein Rad (58, 358) trägt, wobei der zentrale Teil in der angehängten Position des Anhängers oberhalb des Chassis (10, 110, 210, 310) des Zugfahrzeugs mit jedem vertikalen Radträger (40, 340) an der Außenseite des Chassis des Zugfahrzeugs unmittelbar hinter einem Rad (11, 311) dessen Hinterachse angeordnet sein kann.
